# EUROPEAN PATENT APPLICATION

(11) **EP 1 574 445 A1**
(43) Date of publication of application: **14.09.2005**
(21) Application number: 04014967.6
(22) Date of filing: 25.06.2004
(51) Int. Cl.: B65D 21/08, B65D 1/02, B29C 49/48, B29C 53/30

(54) **Pet bottle and method of manufacturing the same**

(30) Priority: 12.03.2004 JP 2004070550
(71) Applicant: Gohsho Company, Ltd., Yamanashi (JP)
(72) Inventor: Higuchi, Mitsuo, Nakakoma-gun Yamanashi (JP)
(74) Representative: Kirschner, Klaus Dieter

(57) **Abstract**

The present invention provides a PET bottle that is adapted such that a capacity of a container body can be extremely reduced when juice or mineral water in the container body is drunk off and the container body is discarded. The present invention proposes a method of manufacturing the PET bottle. In addition, the present invention makes it possible to extremely reduce cost for collection of PET bottles and personal expenses for cleaning and collection. The PET bottle is manufactured using a pair of cylindrical mold bodies (103) for PET bottle that is formed in a bellows shape in a horizontal direction in an entire length or a part of the length in a longitudinal direction thereof excluding a mouth portion on a side in an inner periphery, is lower than a height of the PET bottle body when content is filled therein, and is drilled in a shape substantially the same as a PET bottle body.

## Description

The present invention relates to a PET bottle and a method of manufacturing the same.

In recent years, a quantity of production of synthetic resin bottles has been extremely large. However, when a container body is disposed after juice or mineral water in the container body is drunk off, the container body keeps a shape before the container body is drained. If the container body is thrown in a trash can, the trash can is filled with empty container bodies in a short time as if the trash can is filled with the air. Eventually, empty container bodies are thrown on the street to deteriorate the living environment. In addition, cost for collection of the empty container bodies and personal expenses for cleaning impose a significant burden on the public service.

Further, whereas the synthetic resin bottle of this type can be manufactured by convenient means such as blow molding, it cannot be said that the synthetic resin bottle has sufficient strength for withstanding an impact during transportation by an automobile or other transportation means involving heavy vibration and a weight at the time when synthetic resin bottles are stacked for exhibition at the store.

Moreover, when the containers are transported from a manufacture to a company that fills juice or mineral water in the containers, cost for transportation of the containers is significant because the container bodies are bulky as if the air is transported.

Therefore, the inventor provided a liquid container that was worked out such that the liquid container could be easily reduced in size when the liquid container was collected as a waste article.

This liquid container is made of relatively soft synthetic resin, and peripheral folds of a liquid container body having a mouth portion at an upper end is formed in bellows (see Abstract of Japanese Patent Application Laid-Open No. 2001-213418).

In addition, the inventor proposed an invention for means for manufacturing a container body in a shape, in which a capacity thereof was substantially reduced by giving load in a vertical direction and/or a twisting direction of the container body, and maintaining this reduced shape and an invention for the container body. (see Abstract of Patent Application Laid-Open No. 2002-68156).

As a result, the inventor could attain the above-described objects. In other words, the inventor could further reduce a height and a capacity of the container body when the container body is crushed and keep that state.

In the conventional PET bottle manufacturing means, a so-called biaxially oriented blow molding method using a pre-form is mainly used.

For example, there is an invention for performing opening and closing operations of a pair of molds, in which the pre-form can be set, with a ring and a rotating disc that are axially provided so as to be capable of rotating 180° (see pages 3 and 4 of Japanese Patent Application Laid-Open No. 11-48327). However, there is almost no invention for a new and excellent mold for manufacturing bellows of the container body and folds constituting the bellows and a method of manufacturing the mold.

However, a well-known invention for subjecting a pre-form, which is a primary molded product formed in a predetermined shape in advance, to biaxially oriented blow molding with a primary blow mold to form a primary intermediate molded product, subjecting the primary intermediate molded product to heat processing to force the primary intermediate molded product to thermally shrunk and deformed into a secondary intermediate molded product, and subjecting the secondary intermediate molded product to secondary blow molding to form a bottle or other containers by hardly extending and deforming the secondary molded product compared with primary blow (see page 2 of Japanese Patent No. 2777790).

In general, it is an object of the present invention to provide a PET bottle and a method of making the same where the bottle can be reduced in capacity when juice or mineral water in a container body is drunk off and the container body is discarded.

This object is achieved by the bottle of claim 1 and the method of claim 2. Preferred embodiments of the method are characterized in the sub-claims.

In general, the present invention is characterized by molding used for a blow molding method, which is mainly called stretch blow or indection blow or is generally called PET resin blow, to mold a PET bottle, which is a bottle for juice or mineral water. In particular, the present invention provides a PET bottle having different heights at the time when it is filled with content and at the time when it is empty, which has a smaller height compared with a height in the case in which it is filled with juice or mineral water and is excellent in appearance, and is worked out such that height and capacity thereof can be reduced when the PET bottle is transported from a manufacturer thereof to a company that fills juice or mineral water therein, and proposes a method of manufacturing the same.

A characteristic as means for the above is that a PET bottle having different heights at the time when it is filled with content and at the time when it is empty could be provided, which is characterized by being manufactured using a pair of cylindrical mold bodies for PET bottle that is formed in a bellows shape in a horizontal direction in an entire length or a part of the length in a longitudinal direction thereof excluding a mouth portion on a side in an inner periphery, is lower than a height of a PET bottle body when content is filled therein, and is drilled in a shape substantially the same as the PET bottle body.

In addition, another characteristic of the present invention is that a method of manufacturing a PET bottle body, which has the same inner and outer shapes as the shape of an inner peripheral side of the mold body, could be proposed using a pair of cylindrical mold bodies for PET bottle that is formed in a bellows shape in a horizontal direction in an entire length or a part of the length in a longitudinal direction thereof excluding a mouth portion on a side in an inner periphery, is lower than a height of the PET bottle body when content is filled therein, and is drilled in a shape substantially the same as a PET bottle body, and guiding a pre-form, which is a preliminary molded production formed in a predetermined shape in advance, to the mold body and subjecting the pre-form to heat processing to force the pre-form to thermally expand.

As another characteristic of the present invention, the cylindrical mold bodies include: ring shape mold pieces that have the same height as the folds of the bellows shape, respectively, and are divided into two to the left and right in the horizontal direction; a movable mold that is constituted by putting the ring shape mold pieces one on top of another in substantially the same number as the number of the folds of the bellows shape; a coupling member that couples the ring shape mold pieces adjacent to each other vertically such that the ring shape mold pieces are in contact closely or are slightly spaced apart from each other; and an opening/closing mechanism that operates this coupling member to perform action for causing the ring shape mold pieces adjacent to each other to come into contact or to form a space.

As another characteristic of the present invention, the pre-form is PET bottle resin.

Moreover, as another characteristic of the present invention, the PET bottle body is formed of memory resin that memorizes a height at the time when the PET bottle body is empty.

Note that the present invention is naturally applied to a container body that has a mouth portion at an upper end, a small width in a height direction of a bottom, and a flat portion provided in an intermediate part, and an entire length or a part of the length in a longitudinal direction excluding the mouth portion, the width in the height direction, and the flat portion is formed in a bellows shape in a horizontal direction. It is considered within a technical scope of the present invention that an entire shape of the container body is selected from columnar including elliptical, prism including rectangular, cone and pyramid including beheaded, hourglass drum-shaped, and barrel shaped appropriately, a horizontal sectional shape of the container body is selected from circular including elliptical and square including rectangular appropriately, and the present invention can be applied to manufacturing means for a container that can wind a label, on which a guidance for content in a container, a trademark, or the like is printed, to an outer periphery of the container body.

The number of container bodies manufactured by the method, which are put in a trash can, is remarkably increased compared with container bodies that cannot be put in a trash can in a sufficiently large number. This makes it possible to transport a large number of empty container bodies simultaneously. Thus, cost for collection of the container bodies and personal expenses for cleaning and collection can be reduced remarkably.

In addition, a mold for such a container body is suitable for manufacturing a large number of container bodies, and a bellows portion and folds constituting the bellows are formed surely. As a result, a PET bottle, which is adapted to keep a crushed state when the container body is crushed, and a method of manufacturing the PET bottle could be proposed.

Embodiments of the present invention will now be described with reference to the drawings in which:
FIG. 1A is a front view of an entire body, which is manufactured by an apparatus and a method of the present invention, immediately after manufacture;
FIG. 1B is front view of an entire PET bottle body, which is manufactured by an apparatus and a method of the present invention, in a state in which content is filled therein;
FIG. 2 is an enlarged sectional explanatory view of a fold constituting the PET bottle body;
FIG. 3 is a sectional view showing a shoulder portion immediately after the PET bottle body is manufactured;
FIG. 4 is a sectional view showing a state of an intermediate portion of the PET bottle body;
FIG. 5 is a sectional view showing a state of a bottom of the PET bottle body;
FIG. 6 is a partially cutaway sectional view showing a deformed state at the time when the PET bottle body is crushed;

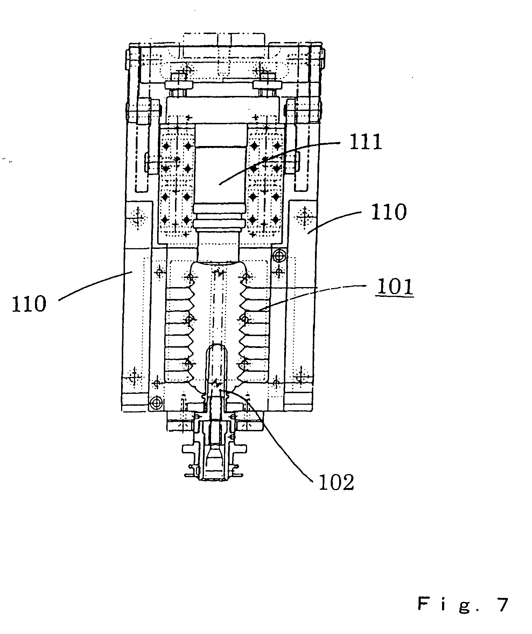

FIG. 7 is a vertical sectional explanatory view of a mold body of an embodiment of the present invention and an apparatus therefor;
FIG. 8 is a half vertical sectional view of the same showing a state in which gaps among folds are closed;
FIG. 9 is a half vertical sectional view of the same showing a state in which the gaps among the folds are opened;
FIG. 10 is a sectional explanatory view in an initial state in which a container body has expanded; and
FIG. 11 is an enlarged sectional view showing a state in which resin enters gaps between adjacent movable molds, and the container body is crushed in the state of Fig. 10.

In the figures, reference numeral 1 denotes a PET bottle body that is obtained according to a manufacturing method of the present invention. In explaining embodiments of the present invention with reference to the accompanying drawings, first, a structure and actions and effects of the PET bottle itself will be explained because characteristics of the present invention is easily understood if the structures and the actions and effects are understood.

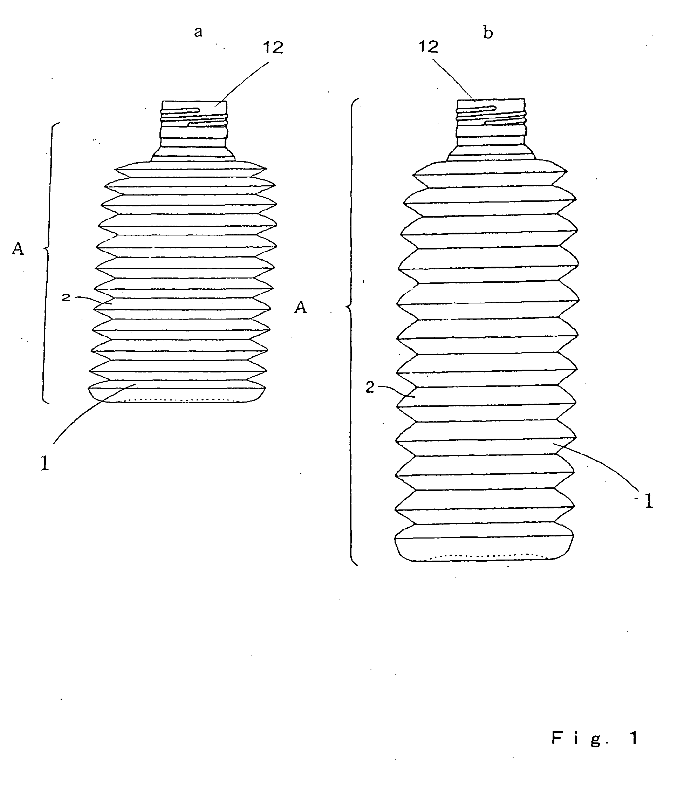

In the PET bottle body 1 shown in FIG. 1A, in a state in which the PET bottle body 1 is taken out from a manufacturing apparatus therefor, a height excluding a mouth portion at the top is A, and an outer periphery and an inner periphery in a length direction are formed in a bellows shape 2. In this case, as a matter of comparison, the height A of this PET bottle body 1 is molded to be small, in other words, the PET bottle body 1 is molded with, for example, a capacity of 200 ml even if the PET bottle body 1 has a capacity of 500 ml when content is filled therein.

The PET bottle body 1 with the small capacity in the height A direction is transported in this state of a cap and sent to, for example, a factory for filling mineral water. In this case, since the PET bottle body 1 with the small capacity is transported rather than the empty PET bottle body 1 with the capacity of 500 ml, a larger number of PET bottle bodies can be transported simultaneously.

The low PET bottle body 1 transported to the factory is changed to the PET bottle body 1 having a regular height A as shown in FIG. 1B by sending liquid other than the air into the PET bottle body 1 in advance, or goods with liquid sent into the PET bottle 1 is transported.

Now, a person removes a cap 12 and drinks content. Since the PET bottle body 1 of the present invention is formed in a bellows shape pulled in a height direction in work for filling the mineral water or the like, the height of the PET bottle body 1 is reduced by an amount of the drunken mineral water even when a person is drinking the mineral water.

Certainly, it is difficult even for a young person to drink off the mineral water filled in the PET bottle body 1 with a capacity of 200 ml each time. In addition, it is trouble to carry the PET bottle with a capacity of 200 ml in a half empty state, and the PET bottle is often thrown away after all. In this regard, if the height of the PET bottle is reduced by an amount of the drunken mineral water every time the mineral water is drunk, it is very convenient to carry the PET bottle by, for example, packing the PET bottle in a handbag. However, as an actual problem, even if the PET bottle body 1 is formed in a shape of bellows, it is difficult to reduce the size of the PET bottle body 1 by 70 to 90% from the regular height only by a restoring force of the shape.

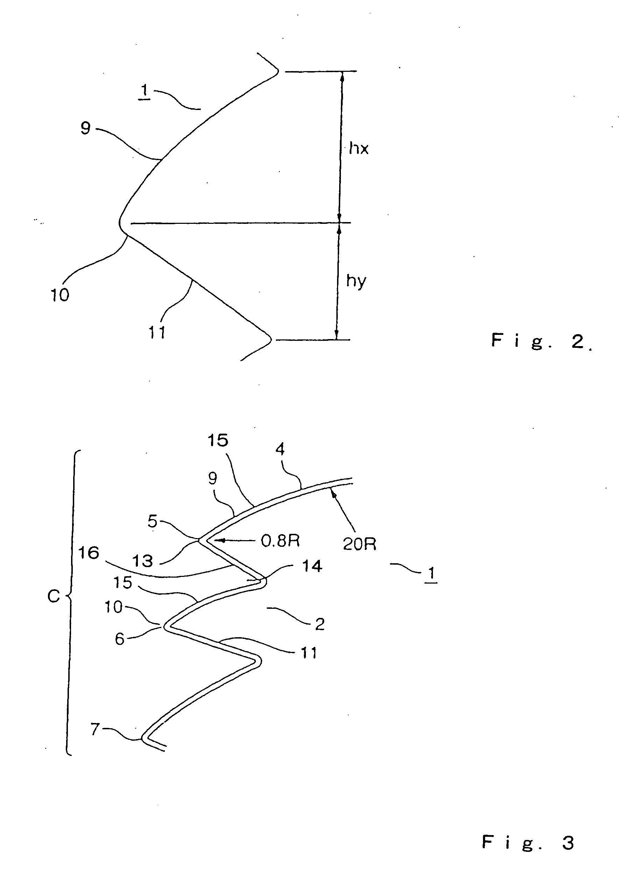

Thus, after, for example, the mineral water in the PET bottle body 1 is drunk off, an external force is applied to the PET bottle body 1 to crush the PET bottle body 1 from one side or both sides in a height (length) direction thereof. This state is shown in FIGS. 2 and 3.

In other words, the present invention has an excellent structure and shows an excellent action in order to bring the PET bottle body 1 into a restored state with the original height when a person is drinking the mineral water or the like in the PET bottle body 1 and in order to keep the crushed state.

As an example of the structure of the container, reference numeral 3 denotes a mouth portion of the container body 1 having a male screw carved in an outer periphery thereof. The mouth portion has a diameter of about 28 mm and a height of about 23 mm. In addition, immediately below the mouth portion, a bell-shaped coupling portion (D) having a height of 5 to 10 mm with a diameter expanded to about 51 mm in a lower part thereof is connected on an axis of the mouth portion 3.

There is a U-shaped annular groove E with a horizontal inner end in a shoulder portion C of the container body 1. An end of the bell-like coupling portion D and a side on the inside of the annular groove E are coupled.

In addition, a side on the outside of the U-shaped groove E is formed in a split spherical shape 4 facing downward. An outer diameter d1 of a bellows shape 5 in a first stage, that is, an outer diameter d1 on an uppermost stage of the bellows shape 2 is set to smaller than an outer diameter d of the container body 1.

An outer diameter d2 of a bellows shape 6 on a second stage is larger than the outer diameter d1 of the bellows shape 5 on the first stage and smaller than the outer diameter d of the container body 1.

The side on the outside of the U-shaped groove E is formed in a step shape viewed from the side such that an outer diameter d3 of a bellows shape 7 on a third stage is larger than the outer diameter d2 of the bellows shape 6 on the second stage and smaller than the outer diameter d of the container body 1. However, it is needless to mention that the side is not limited to three stages but may be plural stages according to circumstances. In the embodiment shown in the figures, it is assumed that the side is formed in the three stages.

More specifically, in the container shown in Fig. 1, the container body 1 with a height of 195 mm, a maximum diameter of 71.5 mm, and a capacity of 500 ml is formed in a shape having folds of twelve stages.

However, in this case, the outer diameter d1 of the bellows shape 5 on the first stage is set to 60.5 mm, and the outer diameter d2 of the bellows shape 6 on the second stage is set to 67.0 mm. A diameter between the bellows shape 5 on the first stage and the bellows shape 6 on the second stage is set to 47 mm.

Similarly, the outer diameter d3 of the bellows shape 7 on the third stage is set to 69.0 mm, and an inner diameter between the bellows shape 6 on the second stage and the bellows shape 7 on the third stage is set to 51.1 mm.

Moreover, an outer diameter d of a bellows shape 8 on a fourth stage, which is equal to the maximum outer diameter of the container body 1, is set to 71.5 mm, and an inner diameter between the bellows shape 7 on the third stage and the bellows shape 8 on the fourth stage is set to 54.5 mm.

Outer diameters of bellows shapes on fifth to twelfth stages below the fourth stage are the same as the outer diameter d of the bellows shape of the fourth stage. Inner diameters of adjacent two bellows shapes are identical with the inner diameter between the bellows shape 7 on the third stage and the bellows shape 8 on the fourth stage.

In this case, the folds take a shape like an unidentified flying object (UFO) called the Adamski type. Therefore, the folds are vertically divided into two in the horizontal direction.

In this case, in the figure, heights of an upper part (h1) and a lower part (h2) of the fold on the first stage are 6.5 mm and 5.5 mm, those of the fold on the second stage are 7 mm and 5 mm, and those of the fold on the third stage are 8.5 mm and 6.5 mm.

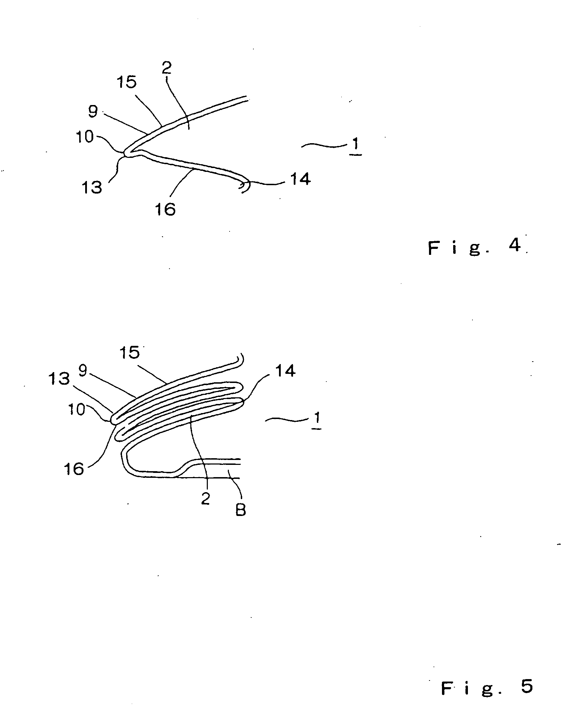

More specifically, a sectional shape of these folds is shown in FIG. 4 and other figures. That is, this is an example of dimensions of the folds on the first stage 5 to the third stage 7. In the figure, it is important that a shape of an upper surface 15 of a wide abacus bead shape is a bay shape projecting to an outer direction with 20 mmR in this embodiment, whereas a lower surface 16 is formed in a linear shape 11 via a projected arc shape 10 with 0.8 mmR.

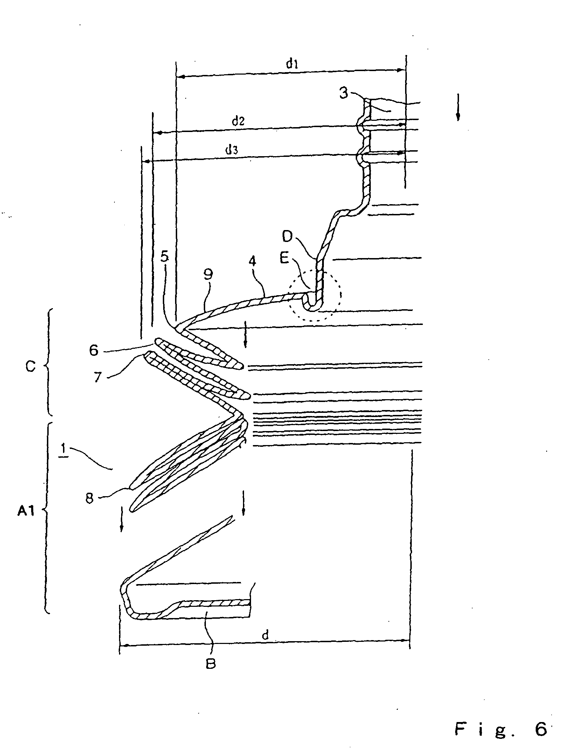

To explain this structure of this embodiment together with an action thereof, in general, the PET bottle body 1 in the state of FIG. 1 is divided into a trunk portion A including a central part and a lower part and a shoulder portion C on the upper part as shown in FIG. 6. In comparison of the portions A1 and C, since diameters of the portions A1 and C consist of large and small diameters, a stable vertical state is maintained.

That is, the trunk portion A1 including the central part and the lower part is formed by an identical fold in inner and outer diameters thereof. The shoulder portion C is bent in a protruded shape with a gentle inclination in a direction of the mouth portion 3 in appearance. In particular, in the shoulder portion C, an inner diameter of a trough 14 forming the fold is gradually reduced from the central part to the mouth portion 3, and a difference of an angle of inclination thereof is made larger than that of the trunk portion A1. Thus, in a state in which this central part extends, even when a person is drinking content, inner diameters and slopes of a crest 13 and the trough 14 forming the fold can keep the state of reduced heights with strength and an elastic force inherent in a material.

Consequently, the shoulder portion C and the trunk portion A1 of the PET bottle body 1 presses the folds of the shoulder portion C, which would be in a shrunk state due to a restoration force thereof, and an end face of the trough 14 compresses a trough end face of the folds located adjacent to each other in a vertical relation.

In a state viewed from the peak of the crest 13 of the fold at this point, this is equivalent to a state in which the troughs 14 on both sides are pushed to the peak side of this crest 13. In this case, since an upper surface 15 of the fold is less inclined compared with a lower surface 16, a compression component of force on a gentle inclination side is larger than a compression component of force on a steep inclination side of the lower surface 16, the trough 14 on the steep inclination side moves to the peak side of the crest 13.

At this point, two significant changes occur in the container body 1. A first change is an increase in the inner diameter of the crest 13 constituting the fold due to an expansion pressure or a decrease in the inner diameter of the trough 14 due to a compression pressure. A second change is bending of the steep side of the lower surface 16 constituting the fold.

Subsequently, when this steep inclination side passes right below the crest 13 and further creeps into the inside on the gentle inclination side of the upper surface 15 as shown in FIG. 5 to move the height of the container body 1 to a reduced state, a force of restoring the inner diameter of the crest 13 and the inner diameter of the trough 14 works or to restore the lower surface 16, which is in a bent state due to the above-described operation, to an extended state and stabilize the lower surface 16.

Therefore, even if a compression force is not always applied, this reduced state could be kept. Then, the trough 14 with a small inner diameter is subjected to a compression pressure to be further reduced in the inner diameter, whereby a pressure stress occurs. When the compression pressure disappears, a stress acts so as to open the trough 14 and restores the trough 14 to the extended state. Thus, the PET bottle body 1 maintains a reduced state under the atmospheric pressure. In the case in which a compression stress does not occur due to a difference of the inner diameter of the trough 14, the PET bottle body 1 maintains the reduced state.

As a result, in repeated experiments, a height (capacity) of the container body 1 decreased to 1/4 to 1/8. Even if the container body 1 was thrown in a trash can, a space occupied by the container body 1 could be reduced remarkably.

Next, an embodiment of a mold, with which the characteristics and the excellent actions and effects in the PET bottle body 1 of the present invention can be shown and which is suitable for mass production of the container body 1, will be described. In the figure, reference numeral 101 denotes a cylindrical mold body divided into two. A pre-form 102 can be inserted from a bottom surface thereof. This mold body 101 is constituted by ring-shaped mold pieces 103 of several stages staked in a height direction.

The ring-shaped mold pieces 103 formed in a disc shape divided into two in a horizontal direction. A lowest stage thereof is an upper split mold 104 in which molds for forming the container body 1, the mouth portion 3, and the split spherical shape portion 4 are carved. A lowest stage thereof is a lower fixed split mold 105 in which a mold for forming the bottom of the container body 1 is carved. Between the upper spit mold 104 and the lower fixed split mold 105, there are movable molds 106 equivalent to the number of folds for forming the bellows shapes 2 of the container body 1.

A height of a split mold for the PET bottle body carved in this mold body 101 is lower than the height at the time when content such as mineral water is actually filled in the PET bottle body.

Usually, there are slight gaps 107 between the upper and lower split molds 104 and 105 and the movable molds 106 and between the adjacent movable molds 106. When a part of a swell of the pre-form 102 enters the gaps 107 slightly, the gaps 107 are closed.

Various structures are possible as this structure. For example, an intermediate part of an X-shaped coupling member 108 is pivotally attached to both sides of the upper split mold 104, the movable molds 106, and the lower fixed split mold 105.

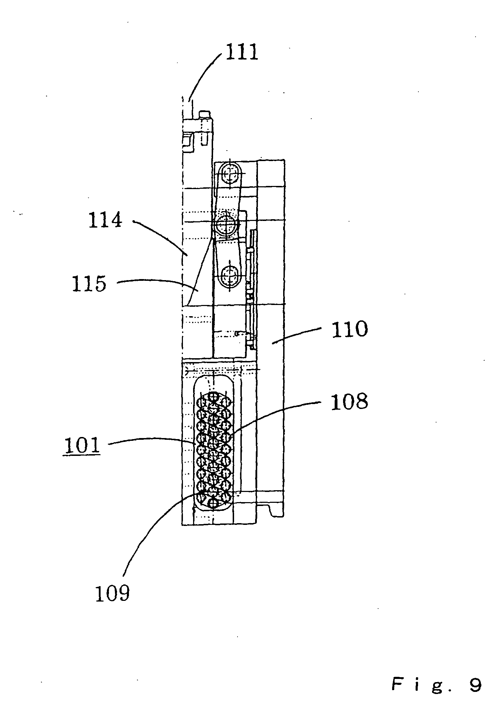

This X-shaped coupling member 108 can be formed by respective linear members 109 with the pivotally attached portion as a fulcrum. The respective both ends are pivotally attached to both ends of the linear members 109 which are adjacent to each other in a vertical relation. As a result, as shown in FIG. 9, the characters "X" of the X-shaped coupling member 108 are coupled in the vertical direction on the side of the mold body 101.

In addition, in the figure, reference numeral 110 denotes a mold frame that is provided in contact with both sides of the mold body 101 and guides the movable molds 106. An upper part thereof is provided above the mold body 101 and is provided with a piston body 111, upper and lower parts of which are guided by the mold frame 110.

An end of this piston body 111 is in contact with an upper end of the X-shaped coupling member 108 and performs an action for pressing the coupling member 108 downward.

An end of a usually V-shaped crank member 112, an intermediate portion 113 of which is pivotally attached, is pivotally attached to an upper part of the piston body 111. An upper end of the crank member 112 is pivotally attached to the mold frame 110.

Reference numeral 114 denotes a cam member that moves up and down with means provided in parallel with the coupling member 108 appropriately. A side of the cam member 114 is in contact with the intermediate portion 113 of the crank member 112, and a taper 115 is formed in an axial direction at a tip thereof.

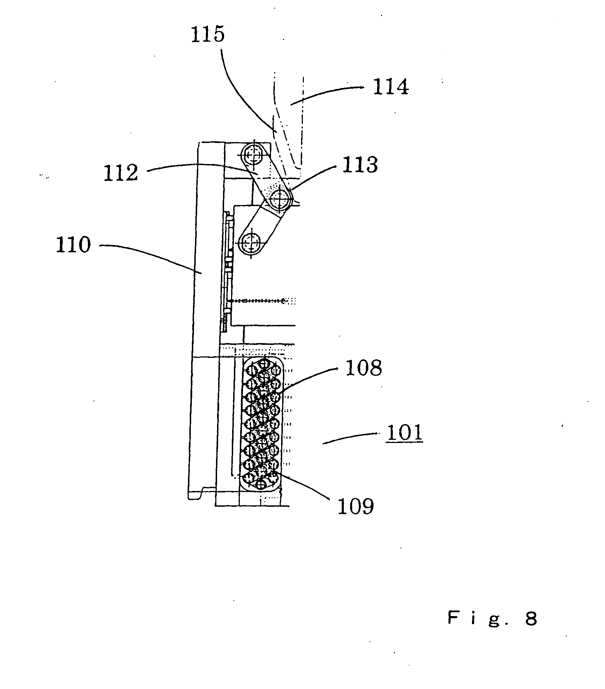

When the cam member 114 as shown in FIG. 8 is not in contact with the intermediate portion 113 of the crank member 112, the crank member 112 forms a V-shape. However, when the cam member 114 falls, the taper 115 presses the intermediate portion 113 of the crank member 112, and the crank member 112 takes a linear shape or a shape close to the linear shape in a vertical direction, the crank member 112 presses the upper end of the X-shaped coupling member 108 downward via the piston body 111. As a result, the gaps 107 of the movable molds 106 are closed.

Note that in the figure, reference numeral 116 denotes a coil spring, an end of which is fastened to the lower split mold 115 of the mold body 101, an upper part thereof passes through the movable molds 106, and an upper end thereof is fastened to the upper spit mold 104 of the mold body 101. A force in a direction of opening the gaps 107 between the upper split mold 104 and the movable molds 106 usually acts on the coil spring 116.

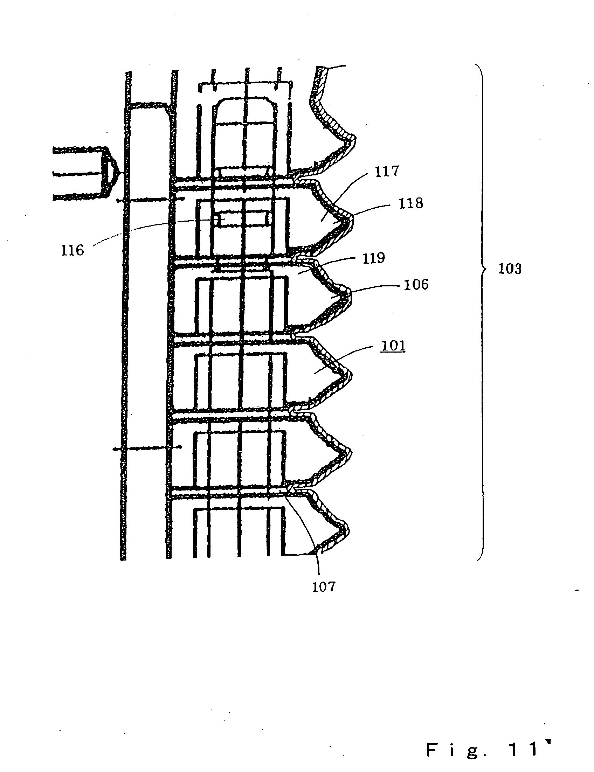

In addition, in FIG. 11, in a fold mold 117 carved inside the movable molds 106 and the lower split mold 105, a part to be the trough 14 of the fold constituting the bellows shape 2 of the container 1 is formed as a crest mold 118. A part between the movable molds 106 overlapping each other or adjacent to each other in the vertical relation is formed as a trough mold 119 for constituting the crest 17 of the fold of the container body 1.

In this case, a coupling portion between the mouth portion 3 of the container body 1 and the container body 1 is formed in a bell shape 120 in order to mold this, and the mold body 101 is constituted so as to reverse and cause the coupling portion to penetrate into the container body 1.

A fold mold 117 for the mouth portion 3 is formed in a wide shape like the Adamski UFO so as to realize the container body 1 that can reduce a height (i.e., capacity) thereof sufficiently even if the mouth portion 3 is not crushed and forced into the container body 1. Therefore, the fold mold 117 is vertically divided into two in a horizontal direction, and shapes of upper and lower parts thereof are specifically common to the container body 1.

To explain a process of manufacturing the container body 1 using the mold body 101 in this embodiment, the gaps 107 of the movable molds 106 are in the opened state. In this state, the pre-form 102 is inserted into the mold body 101 from the bottom thereof. At the same time, sufficiently heated air is sent into the pre-form 102 to swell the pre-form 102. As a result, the pre-form 102 comes into contact with the mold inside the mold body 101 to mold the container body 1. However, a part of the pre-form 102 enters the gaps 107 between the upper and lower split molds 104 and 105 and the movable molds 106 and between the adjacent movable molds 106.

Here, the cam member 114 is lowered by appropriate means, and the taper 115 in the lower part thereof presses the intermediate portion 113 of the crank member 112 little by little. As a result, the crank member 112 is straightened gradually. A force of the crank member 112 presses the upper end of the X-shaped coupling member 109 downward via the piston body 111.

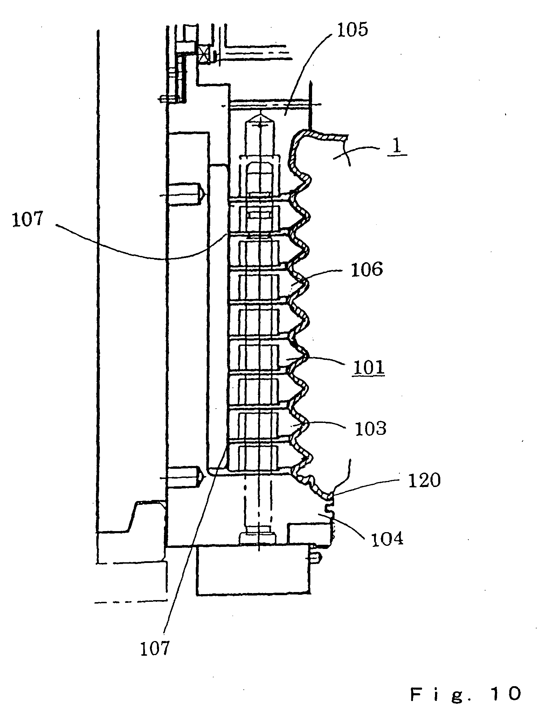

As a result, a part of the resin of the container body 1, which has entered the gaps 107 between the upper and lower split molds 104 and 105 and the movable molds 106 and between the adjacent movable molds 106, is crushed as shown in FIG. 10.

Whereas the trough 14 constituting the fold of the container body 1 was molded only through contact with the mold on the inner surface of the mold in the past, the substantially V-shaped trough 14 is crushed upward and downward to be doubled as shown in the figure in addition to forming a natural fold according to the mold.

As a result, the container body 101, which is molded by the mold body 101 of this embodiment, is easily crushed in the trough 14 thereof, the crushing work can be performed with a finger tip with little power to reduce a height (capacity) of the container body 101.

Note that, in the mold body 101, the cam member 114 rises when the container body 1 is manufactured, the crank member 112 returns to the original V-shape, the gaps 107 are formed between the adjacent movable molds 106 by a restoring force of the coil spring 116. After the container body 1 is removed, the mold body 101 comes into a state for repeating the work for manufacturing a new container body. The PET bottle body 1 obtained in this way is provided with the above-described characteristics of the present invention and realizes the above-described excellent actions and effects.

As another embodiment, it is possible that memory resin is used for the resin material itself forming the PET bottle body 1. Shape memory in this context generally means a characteristic of the PET bottle body 1 that softens to return to a restored form thereof when a pressure of hot air for filling content therein is applied thereto or the PET bottle body 1 is humidified to humidity higher than usual, for example, content with relatively high humidity is filled for sterilization or the like. Plastic having such a characteristic is referred to as shape memory resin.

The PET bottle body 1 molded in a low state changes to, for example, the PET bottle body 1 of a predetermined height with a capacity of 500 ml when content is filled therein. Thereafter, even if the PET bottle body 1 is placed under the normal temperature or cooled, the height or the like is never reduced because the PET bottle body 1 is filled with the content.

However, when an empty portion is formed in the PET bottle body 1 or the PET bottle body 1 is drained, for example, the content is drunk off, the PET bottle body 1 returns to the original low shape.

The resin material may be polystyrene that is frequently used as a material for the PET bottle body 1. This is because polystyrene has a characteristic that it is hard under the normal temperature but softens when temperature is raised. Moreover, polystyrene shows a characteristic like rubber that softens when temperature is raised, that is, a restoring force of returning to an original shape when temperature rises

Note that temperature at which such a change occurs is referred to as "glass transition point" meaning that a material changes from a glass state to a soft rubber state. Since all kinds of resin have this glass transition point, when the present invention is implemented, it is advisable to select and use most excellent resin having such a characteristic. In addition, polyethylene softens in the same manner when it is heated.

The resin returns to the original shape because the resin performs crosslinking reaction to fix molecules each other in a mesh shape. The shape memory resin has a characteristic that is a combination of a characteristic of a plastic material that hardness is changed according to temperature and a characteristic that a shape can be prevented from changing by crosslinking.

A certain material is formed in a desired shape in advance, and a shape thereof is fixed by the crosslinking reaction. When this material is heated to the glass transition temperature or a temperature, at which the material softens, equal to or higher than the melting point to be deformed into a different shape and is cooled in that state, the material changes to the glass state or crystallizes to be hard and fixed in that shape. When this material is heated again to the glass transition temperature or the temperature equal to or higher than the melting point, the material softens to show a rubber-like characteristic and is about to return to the shape fixed by the crosslinking reaction in advance. This is a mechanism of the shape memory.

In this way, the shape memory resin utilizes the two characteristics, that is, the change in hardness according to temperature and the fixing of a shape by the crosslinking reaction. Theoretically, the shape memory performance is developed by utilizing the characteristic that hardness changes at two different temperatures. Other than the crosslinking and the melting point, a method of utilizing a combination of the glass transition temperature and the melting point is also possible. Consequently, various plastics (polymeric materials) can be applied as the shape memory resin.

As described above, in the present invention, when a PET bottle is manufactured, a height (capacity) thereof is low (small) compared with a case in which content such as mineral water is filled in the PET bottle. Thus, when the PET bottles are transported for filling content, a quantity of PET bottles to be transported can be increased compared with that in the past.

As a result, in general, advantages of the present invention are that, in a PET bottle body that is formed in a bellows shape in a horizontal direction in an entire length or a part of the length in a longitudinal direction thereof excluding a mouth portion at an upper end and a small width in a height direction of a bottom, when juice or mineral water in the PET bottle body is drunk off and the PET bottle body is discarded, a capacity of the PET bottle body is reduced, and as a result, a large quantity of empty bottles can be discarded in a fixed area compared with that in the past. In addition, since products on the market as a container for drink usually has a capacity of 500 ml, contents in the container is rarely "drunk off' at a time.

Therefore, the container including an empty part, the capacity of which never changes even if the content remains, has to be carried. In this regard, since the container of the present invention can be carried with an empty part compressed, the container can be easily packed even in a handbag.

Moreover, the container body of the present invention looks nice in an external shape thereof to significantly attract users' interest. A shape of bellows in the container body can function as slip resistance to prevent the container body from slipping to fall during use or prevent content from excavating.

Main advantages of the container body described above are that, when the container body is discarded, a capacity thereof can be extremely reduced, and the number of container bodies, which can be put in a trash can or the like, is extremely increased. In addition, since such a compressed container body can be transported in a large quantity at a time, cost for collection of container bodies and personal expenses for cleaning and collection can be extremely reduced.

## Claims

1. A PET bottle having different heights at the time when the PET bottle is filled with content and at the time when the PET bottle is empty,
wherein the PET bottle is manufactured using a pair of cylindrical mold bodies for PET bottle that is formed in a bellows shape in a horizontal direction in an entire length or a part of the length in a longitudinal direction thereof excluding a mouth portion on a side in an inner periphery, is lower than a height of a PET bottle body when content is filled therein, and is drilled in a shape substantially the same as the PET bottle body.

2. A method of manufacturing a PET bottle having different heights at the time when the PET bottle is filled with content and at the time when the PET bottle is empty,
wherein the method manufactures a PET bottle body using a pair of cylindrical mold bodies for PET bottle that is formed in a bellows shape in a horizontal direction in an entire length or a part of the length in a longitudinal direction thereof excluding a mouth portion on a side in an inner periphery, is lower than a height of the PET bottle body when content is filled therein, and is drilled in a shape substantially the same as a PET bottle body, and guiding a pre-form, which is a preliminary molded production formed in a predetermined shape in advance, to the mold body and subjecting the pre-form to heat processing to force the pre-form to thermally expands.

3. The method of manufacturing a PET bottle having different heights at the time when the PET bottle is filled with content and at the time when the PET bottle is empty according to claim 2, wherein the cylindrical mold bodies include: ring shape mold pieces that have the same height as the folds of the bellows shape, respectively, and are divided into two to the left and right in the horizontal direction; a movable mold that is constituted by putting the ring shape mold pieces one on top of another in substantially the same number as the number of the folds of the bellows shape; a coupling member that couples the ring shape mold pieces adjacent to each other vertically such that the ring shape mold pieces are in contact closely or are slightly spaced apart from each other; and an opening/closing mechanism that operates this coupling member to perform action for causing the ring shape mold pieces adjacent to each other to come into contact or to form a space.

4. The method of manufacturing a PET bottle having different heights at the time when the PET bottle is filled with content and at the time when the PET bottle is empty according to claim 2 or 3, wherein the pre-form is PET bottle resin.

5. The method of manufacturing a PET bottle having different heights at the time when the PET bottle is filled with content and at the time when the PET bottle is empty according to any one of claims 2 to 4, wherein the PET bottle body is formed of memory resin that memorizes a height at the time when the PET bottle body is empty.
